# EUROPÄISCHE PATENTSCHRIFT

(11) **EP 2 217 815 B1**
(45) Veröffentlichungstag und Bekanntmachung des Hinweises auf die Patenterteilung: **23.07.2014**
(21) Anmeldenummer: 08802754.5
(22) Anmeldetag: 02.10.2008
(51) Int. Cl.: F16B 19/10, B60R 21/213

(54) **VORRICHTUNG ZUM BEFESTIGEN EINES ANBAUTEILES AN EINEM TRÄGERTEIL SOWIE BEFESTIGUNGSANORDNUNG MIT EINER DERARTIGEN VORRICHTUNG**
DEVICE FOR FASTENING A CONNECTOR PIECE TO A CARRIER PIECE AND FASTENING ARRANGEMENT HAVING SUCH A DEVICE
DISPOSITIF DE FIXATION D'UN ACCESSOIRE SUR UN ÉLÉMENT SUPPORT, ET SYSTÈME DE FIXATION MUNI D'UN TEL DISPOSITIF

(30) Priorität: 08.11.2007 DE 102007053291
(43) Veröffentlichungstag der Anmeldung: 18.08.2010
(73) Patentinhaber: A. Raymond et Cie., 38000 Grenoble (FR)
(72) Erfinder: BINKERT, Sven, 79774 Albbruck (DE); MOTSCH, Uwe, 79618 Rheinfelden (DE)
(74) Vertreter: RACKETTE Partnerschaft Patentanwälte
(86) Internationale Anmeldenummer: PCT/EP2008/008354
(87) Internationale Veröffentlichungsnummer: WO 2009/059668

(56) Entgegenhaltungen:
- EP-A- 1 081 395
- EP-A- 1 422 112
- FR-A- 2 882 114
- US-A1- 2006 066 080

## Beschreibung

Die Erfindung betrifft eine Vorrichtung zum Befestigen eines Anbauteiles an einem Trägerteil.

Die Erfindung betrifft weiterhin eine Befestigungsanordnung mit einer Vorrichtung zum Befestigen eines Anbauteiles an einem Trägerteil mit einem Anbauteil und mit einem Klammerteil.

Eine derartige Vorrichtung zum Befestigen eines Anbauteiles an einem Trägerteil ist aus US 2006/066080 A1 bekannt. Diese vorbekannte Vorrichtung verfügt über ein Klammerteil, das in eine in dem Trägerteil ausgebildete Trägerteilausnehmung einfügbar ist, um das Anbauteil an dem Trägerteil zu befestigen.

Weiterhin sind Vorrichtungen beispielsweise in Gestalt von mit Schrauben zusammenwirkenden, in dem Trägerteil verankerten Käfigmuttern oder von sogenannten Klipsen bekannt, die durch das Anbauteil durchgeschoben und mit dem Trägerteil verrastet werden.

Diese Anordnungen weisen jedoch in Abhängigkeit der jeweiligen Ausgestaltung die Nachteile eines verhältnismäßig hohen manuellen Aufwands bei dem Verbindungsvorgang und/oder einer gegenüber den üblichen Anforderungen verhältnismäßig geringen Auszugskraft auf. Weiterhin ist es nicht immer einfach, das korrekte Ausführen des Montagevorganges zu kontrollieren.

Der Erfindung liegt die Aufgabe zugrunde, eine Vorrichtung zum Befestigen eines Anbauteiles an einem Trägerteil sowie eine Befestigungsanordnung mit einer derartigen Vorrichtung der eingangs genannten Arten anzugeben, die sich bei einem verhältnismäßig einfach durchzuführenden sowie auf korrekte Ausführung einfach zu kontrollierenden Montagevorgang durch eine verhältnismäßig hohe Auszugskraft auszeichnen.

Diese Aufgabe wird bei einer Vorrichtung zum Befestigen eines Anbauteils an einem Trägerteil erfindungsgemäß mit den kennzeichnenden Merkmalen des Patentanspruchs 1 sowie bei einer Befestigungsanordnung mit einer derartigen Vorrichtung erfindungsgemäß mit den kennzeichnenden Merkmalen des Patentanspruches 9 gelöst.

Dadurch, dass bei der erfindungsgemäßen Vorrichtung das Klammerteil auf den Randbereich der in dem Trägerteil ausgebildeten Trägerteilausnehmung aufschiebbar ist, ist ein sehr inniger Formschluss zwischen dem Klammerteil und dem Trägerteil erzielt, der eine sehr hohe Auszugskraft zur Folge hat. Durch das Anordnen des an dem gegenüber dem Klammerteil verschieblichen Sicherungsteiles ausgebildeten Sicherungsstift bei in die Trägerteilaufnahme eingefügter Anordnung des Trägerteiles in der Trägerteilausnehmung ist ein unbeabsichtigtes Verschieben des Klammerteiles aus dem Formschluss blockiert und überdies aufgrund des bei eingeschobener Anordnung des Sicherungsteiles deutlich erkennbarer, das Klammerteil sichernder Anordnung des Sicherungsteiles das ordnungsgemäße Durchführen des Montagevorganges sehr einfach kontrollierbar.

Bei der erfindungsgemäßen Befestigungsanordnung ist durch die Verbindung einer erfindungsgemäßen Vorrichtung mit dem Anbauteil überdies eine besonders montagefreundliche Vorkonfektionierung erzielt.

Weitere zweckmäßige Ausgestaltungen und Vorteile der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles der Erfindung unter Bezug auf die Figuren der Zeichnung. Es zeigen:
- Fig. 1: in einer perspektivischen Ansicht ein Ausführungsbeispiel einer erfindungsgemäßen Befestigungsanordnung, die ein Anbauteil und eine erfindungsgemäße Vorrichtung zum Befestigen eines Anbauteiles an einem Trägerteil mit einem mit dem Anbauteil verbundenen Klammerteil und mit einem Sicherungsteil in einer erhabenen Vormontagestellung aufweist,
- Fig. 2: das Ausführungsbeispiel der erfindungsgemäßen Vorrichtung gemäß Fig. 1 in der Vormontagestellung mit Blick auf einen Sperrarm des Sicherungsteiles, der mit einer an dem Klammerteil ausgebildeten Sperrzunge in Eingriff ist,
- Fig. 3: in einer geschnittenen perspektivischen Ansicht das Ausführungsbeispiel einer erfindungsgemäßen Vorrichtung gemäß Fig. 1 und Fig. 2 mit Blick auf den Federarm des Sicherungsteiles sowie auf einen an dem Klammerteil ausgebildeten Federschenkel,
- Fig. 4: in einer perspektivischen Ansicht ein mit einer Trägerteilausnehmung ausgebildetes Trägerteil, in die das Klammerteil bei dem Ausführungsbeispiel gemäß Fig. 1 bis Fig. 3 eingefügt ist,
- Fig. 5: in einer geschnittenen perspektivischen Ansicht die Anordnung gemäß Fig. 4 mit dem Klammerteil in einer auf das Trägerteil aufgeschobenen Anordnung und
- Fig. 6: die Anordnung gemäß Fig. 4 und Fig. 5 mit dem Sicherungsteil in einer eingeschobenen Endmontagestellung.

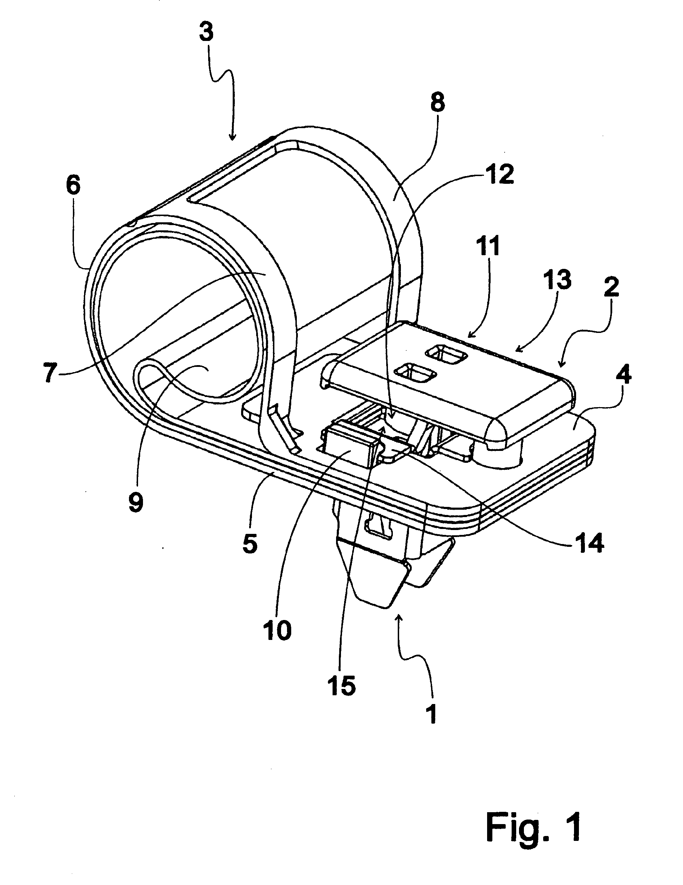

Fig. 1 zeigt in einer perspektivischen Ansicht ein Ausführungsbeispiel einer erfindungsgemäßen Befestigungsanordnung mit einer erfindungsgemäßen Vorrichtung, die über ein als aus einem Blechstreifen hergestelltes Stanz-Biege-Teil ausgebildetes Klammerteil 1 und über ein aus einem hartelastischen Kunststoffmaterial hergestelltes Sicherungsteil 2 verfügt. Bei der Befestigungsanordnung gemäß Fig. 1 ist weiterhin ein Luftsackaufnahmeteil 3 als Anbauteil vorhanden, das mit einem planen Deckabschnitt 4 und mit einem parallel in einem Abstand zu dem Deckabschnitt angeordneten planen Bodenabschnitt 5 zwischen dem Klammerteil 1 und dem Sicherungsteil 2 angeordnet ist. Zwischen dem Deckabschnitt 4 und dem Bodenabschnitt 5 weist das Luftsackaufnahmeteil 3 einen hohlzylinderartig ausgebildeten Aufnahmeabschnitt 6 auf, der an seiner dem Deckabschnitt 4 zugewandten Seite 2 randseitig angeordnete Anbindungsstege 7, 8 aufweist, die mit dem Deckabschnitt 4 verbunden sind. Weiterhin lässt sich Fig. 1 entnehmen, dass das Luftsackaufnahmeteil 3 einen aus einem flexiblen, sehr reißfesten Gewebe gebildeten Luftsack 9 umschließt, der mit Endabschnitten zwischen dem Deckabschnitt 4 und dem Bodenabschnitt 5 angeordnet ist.

An dem Luftsackaufnahmeteil 3 sind als Rastanordnung Laschenrastnasen 10, 11 ausgebildet, die beidseitig einer in dem Deckabschnitt 4 ausgebildeten ersten Klammeraufnahmeausnehmung 12 angeordnet sind und in der in Fig. 1 dargestellten Vormontagestellung der erfindungsgemäßen Befestigungsanordnung an dem Klammerteil 1 ausgebildete, seitlich nach außen vorstehende Seitenlaschen 13, 14 hintergreifen, während das Klammerteil 1 weiterhin durch eine in dem Bodenabschnitt 5 ausgebildete zweite Klammeraufnahmeausnehmung 15 quert und dabei ebenfalls in den zwischen dem Deckabschnitt 4 und dem Bodenabschnitt 5 liegenden Abschnitten des Luftsacks 9 eingebrachte Durchtrittausnehmungen passiert.

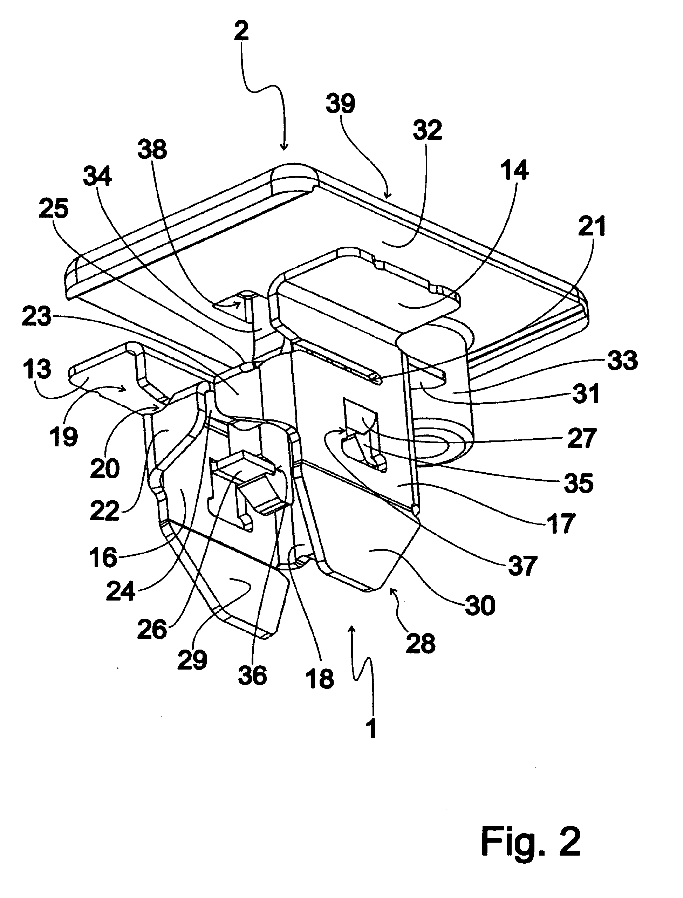

Fig. 2 zeigt in einer perspektivischen Ansicht das Ausführungsbeispiel einer ein Klammerteil 1 und ein Sicherungsteil 2 aufweisenden erfindungsgemäßen Vorrichtung. Aus Fig. 2 ist ersichtlich, dass das Klammerteil 1 über eine erste Seitenwand 16 und über eine zweite Seitenwand 17 verfügt, die parallel zueinander ausgerichtet und über eine Rückwand 18, zu der sie jeweils rechtwinklig ausgerichtet sind, miteinander verbunden sind. Die Seitenlaschen 13, 14 sind jeweils an einer Seitenwand 16, 17 in einem Kopfbereich 19 des Klammerteiles 1 angeformt. In einem Abstand von den Seitenlaschen 13, 14 ist in jede Seitenwand 16, 17 ein sich in einem Abstand von der Rückwand 18 von dieser wegweisend erstreckender Aufnahmeschlitz 20, 21 einer Trägerteilaufnahme eingebracht, der auf seiner der Rückwand 18 abgewandten offenen Mündungsseite trichterartig aufgeweitet ist.

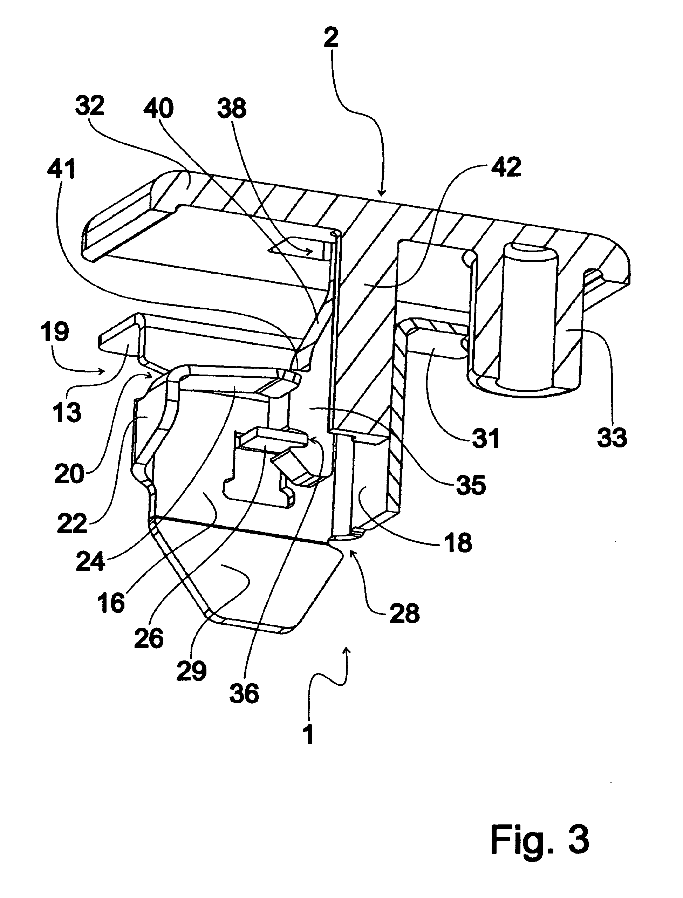

An der der jeweiligen Seitenlaschen 13, 14 gegenüberliegenden Seite des betreffenden Aufnahmeschlitzes 20, 21 weist jede Seitenwand 16, 17 einen sich in Richtung der gegenüberliegenden Seitenwand 16, 17 erstreckenden Stirnabschnitt 22, 23 auf, an denen jeweils ein Federschenkel 24, 25 angeformt ist, die zwischen den Seitenwänden 16, 17 angeordnet sind, sich in Richtung der Rückwand 18 erstrecken und mit einer von den Stirnabschnitten 22, 23 in Richtung der Rückwand 18 ansteigenden Schräge winklig zu den Seitenlaschen 13, 14 ausgerichtet sind. Somit sind die freien Enden der Federschenkel 24, 25 in Längsrichtung des Klammerteiles 1 zwischen den Aufnahmeschlitzen 20, 21 und den Seitenlaschen 13, 14 angeordnet. Jeder Federschenkel 24, 25 ist, wie aus Fig. 3 ersichtlich ist, an seinem dem jeweiligen Stirnabschnitt 22, 23 abgewandten freien Ende in Richtung des Fußbereiches 28 abgewinkelt.

Jede Seitenwand 16, 17 weist eine durch Ausstanzen ausgebildete Sperrzunge 26, 27 auf, die zwischen dem Kopfbereich 19 auf der der betreffenden Seitenlasche 13, 14 abgewandten Seite des betreffenden Aufnahmeschlitzes 20, 21 und einem dem Kopfbereich 19 gegenüberliegenden Fußbereich 28 des Klammerteils 1 angeordnet sind. Die Sperrzungen 26, 27 erstrecken sich von der Seitenwand 16, 17, an der sie ausgebildet sind, in Richtung der gegenüberliegende Seitenwand 16, 17 und sind rechtwinklig zu den Seitenwänden 16, 17 ausgerichtet.

Weiterhin lässt sich der Darstellung gemäß Fig. 1 entnehmen, dass jede Seitenwand 16, 17 im Fußbereich 28 eine sich von dem Kopfbereich 19 wegweisend verjüngende sowie nach innen angestellte Einführzunge 29, 30 aufweist.

Schließlich weist das Klammerteil 1 eine Widerlagerlasche 31 auf, die im Kopfbereich 19 an die Rückwand 18 angeformt ist und sich von der Rückwand 18 wegweisend rechtwinklig nach außen erstreckt.

Das Sicherungsteil 2 ist mit einer flachen Deckplatte 32 ausgebildet, an deren dem Klammerteil 1 zugewandten Seite ein hohlzylinderartiger Sicherungsstift 33 angeformt ist. Der Sicherungsstift 33 liegt in der Vormontageanordnung gemäß Fig. 2 an der Widerlagerlasche 31 an, die mit ihrem freien Ende an die Außenkontur des Sicherungsstiftes 33 formangepasst ist.

Weiterhin sind an der Deckplatte 32 ein erster Sperrarm 34 und ein zweiter Sperrarm 35 angeformt, die sich ebenfalls in Richtung des Klammerteiles 1 erstrecken und zwischen den Seitenwänden 16, 17 nahe jeweils einer Seitenwand 16, 17 angeordnet sind. Jeder federnd elastisch ausgebildete Sperrarm 34, 35 weist an seinem der Deckplatte 32 abgewandten freien Ende eine Sperrzungennut 36, 37 auf, in der in der erhabenen Vormontagestellung des Sicherungsteils 2 gemäß Fig. 2 die dem jeweiligen Sperrarm 34, 35 nächstbenachbarte Sperrzunge 26, 27 angeordnet ist, so dass das Sicherungsteil 2 gegenüber einem Verschieben in Richtung des Klammerteiles 1 blockiert ist. Weiterhin lässt sich Fig. 2 entnehmen, dass im Anbindungsbereich jedes Sperrarmes 34, 35 auf der der jeweiligen Sperrzungennut 36, 37 zugewandten Seite in die Deckplatte 32 jeweils eine Entsicherungsausnehmung 38, 39 eingebracht ist, die das Einführen eines Werkzeugs zum Einwirken auf die Sperrarme 34, 35 zulassen.

Fig. 3 zeigt das Ausführungsbeispiel einer erfindungsgemäßen Vorrichtung gemäß Fig. 1 und Fig. 2 in der Vormontagestellung gemäß Fig. 2 in einer perspektivischen geschnittenen Ansicht. Der Darstellung gemäß Fig. 3 lässt sich entnehmen, dass die Widerlagerlasche 31 in der Ebene der Seitenlaschen 13, 14 liegt. Weiterhin lässt sich in Fig. 3 erkennen, dass jeder Sperrarm 34, 35 mit einer sich von der Deckplatte 32 weg erstreckenden Entsicherungsschräge 40 ausgebildet ist, die sich von einer Randseite der betreffenden Entsicherungsausnehmung 38, 39 in Verlängerung der betreffenden Entsicherungsausnehmung 38, 39 in den von der betreffenden Entsicherungsausnehmung 38, 39 in Längsrichtung überdeckten Bereich erstreckt, so dass ein rechtwinklig zu der Deckplatte 32 in die Entsicherungsausnehmungen 38, 39 eingefügtes Werkzeug zwangsweise mit den Entsicherungsschrägen 40 in Kontakt kommt. An dem der Deckplatte 32 abgewandten Ende der Entsicherungsschrägen 40 weist jeder Sperrarm 34, 35 eine in Längsrichtung der Sperrarme 34, 35 Hintergriffstufe 41 auf, die den Sperrzungennuten 36, 37 vorgelagert ist.

Weiterhin lässt sich Fig. 3 entnehmen, dass das Sicherungsteil 1 über einen zwischen den Sperrarmen 34, 35 angeordneten, sich von der Deckplatte 32 rechtwinklig ausgerichtet wegweisend erstreckenden Mittelstift 42 verfügt, der zu Zwecken der Führung an der Rückwand 18 des Klammerteiles 1 anliegt.

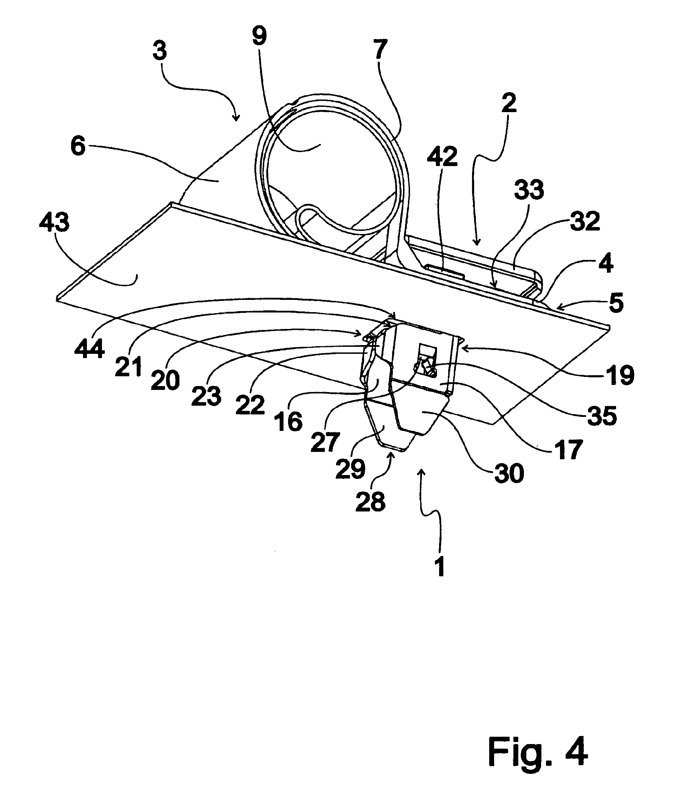

Fig. 4 zeigt in einer perspektivischen Ansicht die beispielhafte erfindungsgemäße Befestigungsanordnung gemäß Fig. 1 sowie die beispielhafte erfindungsgemäße Vorrichtung gemäß Fig. 1 bis Fig. 3 in einer Anordnung, in der sie in eine in einem Trägerteil 43, hier in Gestalt eines flachen Karosseriebleches eines Kraftfahrzeugs, eingebrachte Trägerteilausnehmung 44 eingefügt ist. Die Trägerteilausnehmung 44 ist an die Umfangsgestalt des Klammerteiles 1 mit einem verhältnismäßig geringen Übermaß formgepasst. Fig. 4 lässt sich entnehmen, dass der Abstand in Längsrichtung zwischen den Aufnahmeschlitzen 20, 21 und dem Bodenabschnitt 5 des Luftsackaufnahmeteiles 3 so eingerichtet ist, dass er der Dicke des Trägerteiles 43 entspricht. Das Sicherungsteil 2 befindet sich in der Anordnung gemäß Fig. 4 in der gegenüber dem Klammerteil 1 erhabenen Vormontagestellung.

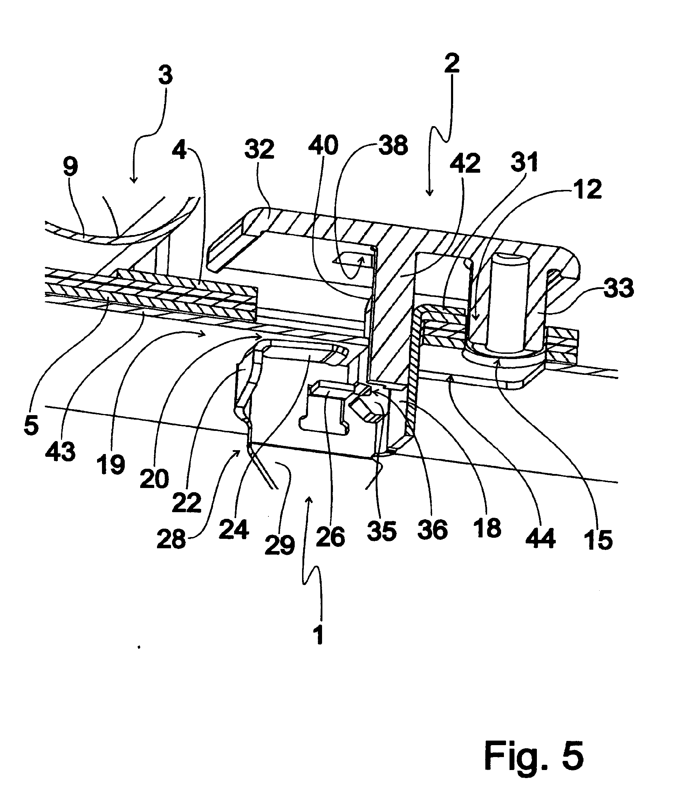

Fig. 5 zeigt in einer perspektivischen geschnittenen Ansicht die beispielhafte erfindungsgemäße Befestigungsanordnung gemäß Fig. 1 und Fig. 4 sowie die beispielhafte erfindungsgemäße Vorrichtung gemäß Fig. 1 bis Fig. 4 in einer gegenüber der Anordnung gemäß Fig. 4 in Bezug auf das Trägerteil 43 derart versetzten Anordnung, dass der an die Trägerteilausnehmung 44 angrenzende Randbereich des Trägerteiles 43 in den Aufnahmeschlitzen 20, 21 angeordnet ist, wobei durch die entsprechende Dimensionierung der Aufnahmeschlitze 20, 21 in Tiefenrichtung sowie der Anordnung der Sperrarme 34, 35 bei Anschlag des Randbereiches an die der Rückwand 18 benachbarten geschlossenen Endbereiche der Aufnahmeschlitze 20, 21 der Randbereich des Trägerteiles 43 an den Sperrarmen 34, 35 anliegt und diese so weit in Richtung der Rückwand 18 des Klammerteiles 1 bewegt hat, dass der Eingriff zwischen den Sperrzungen 26, 27 und den Sperrzungennuten 36, 37 beseitigt ist. Weiterhin lässt sich Fig. 5 entnehmen, dass in dieser auf das Trägerteil 43 aufgeschobenen Anordnung des Klammerteiles 1 der Sicherungsstift 33 des Sicherungsteiles 2 in Verlängerung der nunmehr wieder freigelegten Trägerteilausnehmung 44 angeordnet ist.

Aus Fig. 5 ist weiterhin ersichtlich, dass jeder Schenkel 24, 25 an der dem Fußbereich 28 des Klammerteiles 1 zugewandten Seite des Trägerteiles 43 anliegt und die beispielhafte erfindungsgemäße Befestigungsanordnung beziehungsweise die beispielhafte erfindungsgemäße Vorrichtung aufgrund der ausgeübten Andruckkraft gegen ein unbeabsichtigtes Verschieben wieder in die Anordnung gemäß Fig. 5 zurück sichert.

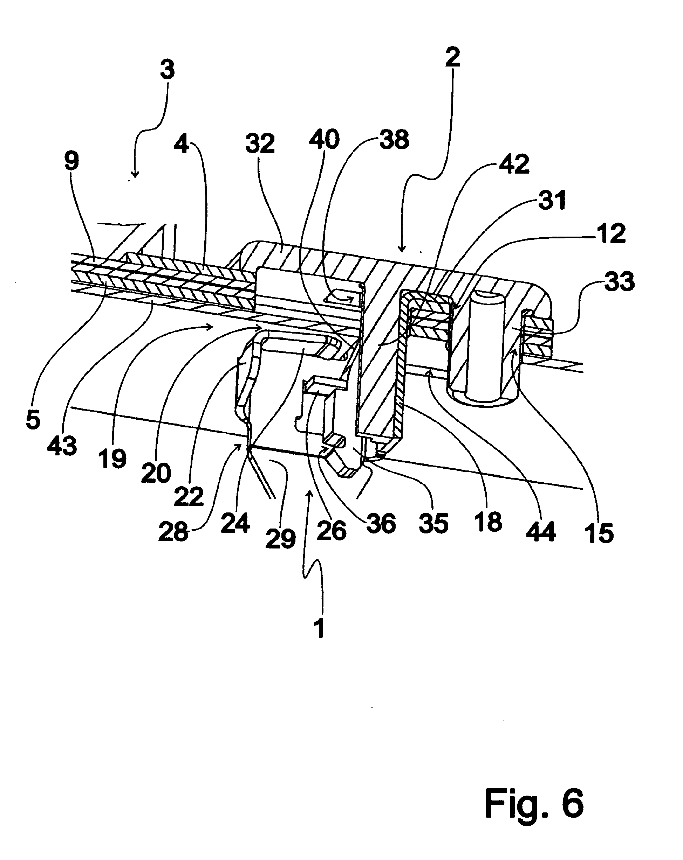

Fig. 6 zeigt in einer perspektivischen teilgeschnittenen Ansicht die Anordnung des Trägerteiles 43 sowie der beispielhaften erfindungsgemäßen Befestigungsanordnung sowie der beispielhaften erfindungsgemäßen Vorrichtung gemäß Fig. 4 und Fig. 5 mit dem Sicherungsteil 2 in einer gegenüber der Vormontagestellung gemäß Fig. 1 bis Fig. 5 eingeschobenen Endmontagestellung. Die Endmontagestellung lässt sich ausgehend von der Anordnung gemäß Fig. 5 dadurch einnehmen, dass auf die Deckplatte 32 des Sicherungsteiles 2 bei nunmehr freiliegenden Sperrarmen 34, 35 in Längsrichtung des Klammerteiles 1 eine Druckkraft ausgeübt wird, so dass das Sicherungsteil 2 in Richtung des Klammerteiles 1 verschoben wird, bis die Deckplatte 32 an dem Deckabschnitt 4 des Luftsackaufnahmeteiles 3 aufliegt. In der Endmontagestellung hintergreifen die Sperrzungen 26, 27 nunmehr die Hintergriffstufen 41 der Sperrarme 34, 35 und fixieren das Sicherungsteil 2 in der eingeschobenen Endmontagestellung.

Weiterhin ist der Sicherungsstift 33 durch die Trägerteilausnehmung 44 durchgetreten und liegt an dem den in die Aufnahmeschlitze 20, 21 eingefügten Randbereich gegenüberliegenden Randbereich der Trägerteilausnehmung 44 an, so dass die erfindungsgemäße Vorrichtung beziehungsweise die erfindungsgemäße Befestigungsanordnung an dem Trägerteil 43 gesichert ist, da nunmehr ein Verschieben der Befestigungsanordnung beziehungsweise der Vorrichtung aus der Anordnung gemäß Fig. 6 in die Anordnung gemäß Fig. 4 beziehungsweise Fig. 5 in der eingeschobenen Endmontagestellung des Sicherungsteiles 2 durch den Sicherungsstift 33 blockiert ist.

Zum Lösen des Eingriffs zwischen den Sperrzungen 26, 27 des Klammerteiles 1 sowie den an den Sperrarmen 34, 35 des Sicherungsteiles 2 ausgebildeten Hintergriffstufen 41 ist durch die in die Deckplatte 32 des Sicherungsteiles 2 eingebrachten Entsicherungsausnehmungen 38, 39 ein Werkzeug beispielsweise in Gestalt einer zweizinkigen Gabel oder von zwei stiftartigen Gegenständen durchführbar, das beziehungsweise die nach Aufgleiten an den Entsicherungsschrägen 40 der Sperrarme 34, 35 die Sperrarme 34, 35 in Richtung der Rückwand 18 des Klammerteiles 1 bewegen und nach Lösen des Hintergriffs ein Bewegen des Sicherungsteiles 2 zurück in die erhabene Vormontagestellung gestatten. In der Vormontagestellung ist der Sicherungsstift 33 wieder aus der Trägerteilausnehmung 44 ausgetreten, und die beispielhafte erfindungsgemäße Befestigungsanordnung beziehungsweise die beispielhafte erfindungsgemäße Vorrichtung lässt sich wieder zurück in die Anordnung gemäß Fig. 4 verschieben, wobei durch die endseitige Abwinklung der freien Enden der Federschenkel 24, 25 ein im Wesentlichen widerstandsfreies Gleiten sichergestellt ist, und von dem Trägerteil 43 abnehmen.

## Patentansprüche

1. Vorrichtung zum Befestigen eines Anbauteiles (3) an einem Trägerteil (43) mit einem in eine in dem Trägerteil (43) ausgebildete Trägerteilausnehmung (44) einfügbaren Klammerteil (1), **dadurch gekennzeichnet, dass** das Klammer teil (1) einen Aufnahmeschlitz (20, 21) einer Trägerteilaufnahme zur Aufnahme eines an die Trägerteilausnehmung (44) angrenzenden Randbereiches des Trägerteiles (43) aufweist sowie zum Befestigen des Trägerteiles (43) an dem Anbauteil (3) eingerichtet ist und dass ein mit dem Klammerteil (1) verbundenes sowie gegenüber dem Klammerteil (1) verschiebliches Sicherungsteil (2) vorhanden ist, das einen Sicherungsstift (33) aufweist, der bei in die Trägerteilaufnahme (20, 21) eingefügter Anordnung des Trägerteiles (43) in der Trägerteilausnehmung (44) angeordnet ist, so dass das Klammerteil (1) an dem Trägerteil (43) festgelegt ist.

2. Vorrichtung nach Anspruch 1, **dadurch gekennzeichnet, dass** das Klammerteil (1) zwei einander gegenüberliegende Seitenwände (16, 17) aufweist, die in einem dem Sicherungsteil (2) zugewandten Kopfbereich (19) als Trägerteilaufnahme jeweils einen Aufnahmeschlitz (20, 21) aufweist, die zu einer Randseite der betreffenden Seitenwand (16, 17) offen sind.

3. Vorrichtung nach Anspruch 2, **dadurch gekennzeichnet, dass** an in dem Kopfbereich (19) liegenden Enden jeder Seitenwand (16, 17) eine seitlich nach außen abstehende, rechtwinklig zu der Seitenwand (16, 17) ausgerichtete Seitenlasche (13, 14) angeformt ist.

4. Vorrichtung nach Anspruch 3, **dadurch gekennzeichnet, dass** in dem Kopfbereich (19) Federschenkel (24, 25) vorhanden sind, die rechtwinklig zu den Seitenwänden (16, 17) und schräg zu den Aufnahmeschlitzen (20, 21) ausgerichtet sind.

5. Vorrichtung nach einem der Ansprüche 2 bis 4, **dadurch gekennzeichnet, dass** an einer zwischen den Seitenwänden (16, 17) angeordneten Rückwand (18) des Klammerteiles (1) eine Widerlagerlasche (31) ausgebildet ist, die rechtwinklig zu der Rückwand (18) ausgerichtet ist und die mit ihrem von der Rückwand (18) abgewandten freien Ende nahe des Sicherungsstiftes (33) endet.

6. Vorrichtung nach einem der Ansprüche 1 bis 5, **dadurch gekennzeichnet, dass** der Sicherungsstift (33) an einer Deckplatte (32) des Sicherungsteiles (2) angeformt ist.

7. Vorrichtung nach Anspruch 6, **dadurch gekennzeichnet, dass** das Sicherungsteil (2) wenigstens einen an der Deckplatte (32) angeformten Sperrarm (34, 35) aufweist, der mit einer an dem Klammerteil (1) ausgebildeten Sperrzunge (26, 27) zusammenwirkt und das Sicherungsteil (2) in einer erhabenen Vormontagestellung sowie in einer eingeschobenen Endmontagestellung fixiert.

8. Vorrichtung nach Anspruch 7, **dadurch gekennzeichnet, dass** die Deckplatte (32) wenigstens eine Entsicherungsausnehmung (38, 39) aufweist, durch die zum Lösen des Eingriffs des oder jedes Sperrarms (34, 35) mit der betreffenden Sperrzunge (26, 27) ein auf den oder jeden Sperrarm (34, 35) einwirkendes Werkzeug durchführbar ist.

9. Befestigungsanordnung mit einem Anbauteil (3), **dadurch gekennzeichnet, dass** eine Vorrichtung gemäß einem der Ansprüche 1 bis 8 vorhanden ist und dass das Anbauteil (3) eine zum Verbinden mit dem Klammerteil (1) ausgebildete Rastanordnung (10, 11) aufweist.

## Claims

1. Device for fastening a connector piece (3) to a carrier piece (43), comprising a bracket piece (1) which is insertable into a carrier piece recess (44) formed in the carrier piece (43), **characterised in that** the bracket piece (1) has a receptacle slit (20, 21) of a carrier piece receptacle for receiving an edge region of the carrier piece (43) adjoining the carrier piece recess (44) and is configured to fasten the carrier piece (43) to the connector piece (3) and **in that** a fastening piece (2) connected to the bracket piece (1) and displaceable relative to the bracket piece (1) is provided and has a securing pin (33) which, in the arrangement of the carrier piece (43) inserted into the carrier piece receptacle (20, 21), is arranged in the carrier piece recess (44), so that the bracket piece (1) is fixed on the carrier piece (43).

2. Device according to claim 1, **characterised in that** the bracket piece (1) has two mutually opposing side walls (16, 17), each having a receptacle slit (20, 21) in a head region (19) facing toward the fastening piece (2) as a carrier piece receptacle, said slits being open toward an edge side of the respective side wall (16, 17).

3. Device according to claim 2, **characterised in that** a laterally outwardly protruding side plate (13, 14) oriented perpendicularly to the side wall (16, 17) is formed at ends situated in the head region (19) of each side wall (16, 17).

4. Device according to claim 3, **characterised in that** sprung limbs (24, 25) which are oriented perpendicularly to the side walls (16, 17) and obliquely to the receptacle slits (20, 21) are provided in the head region (19).

5. Device according to one of the claims 2 to 4, **characterised in that**, provided at a rear wall (18) arranged between the side walls (16, 17) of the bracket piece (1) is an abutment plate (31) which is oriented perpendicularly to the rear wall (18) and ends with its free end facing away from the rear wall (18) close to the securing pin (33).

6. Device according to one of the claims 1 to 5, **characterised in that** the securing pin (33) is provided on a cover plate (32) of the fastening piece (2).

7. Device according to claim 6, **characterised in that** the fastening piece (2) has at least one blocking arm (34, 35) which is formed on the cover plate (32) and cooperates with a blocking tongue (26, 27) provided on the bracket piece (1) and fixes the fastening piece (2) in a raised pre-assembly position as well as in an inserted final assembly position.

8. Device according to claim 7, **characterised in that** the cover plate (32) has at least one unfastening cut-out (38, 39) through which, in order to release the engagement of the blocking arm(s) (34, 35) with the respective blocking tongue (26, 27), a tool which acts on the blocking arm(s) (34, 35) can be inserted.

9. Fastening arrangement having a connector piece (3), **characterised in that** a device according to one of the claims 1 to 8 is provided and that the connector piece (3) has a latching arrangement (10, 11) which is configured for connecting to the bracket piece (1).

## Revendications

1. Dispositif de fixation d'un élément rapporté (3) sur un élément porteur (43) comprenant un élément d'agrafage (1) destiné à être inséré dans un évidement (44) ménagé dans l'élément porteur (43), **caractérisé en ce que** l'élément d'agrafage (1) comporte une fente de réception (20, 21) pour un logement ménagé dans l'élément porteur pour l'emmanchement d'une portion de rive de l'élément porteur (43) attenant à l'évidement (44) ménagé dans l'élément porteur, tout en étant également agencé pour assurer la fixation de l'élément porteur (43) sur l'élément rapporté (3) et **en ce qu'**il est prévu un élément d'immobilisation en position (2) qui est raccordé à l'élément d'agrafage (1), et qui est également susceptible d'être déplacé par rapport à l'élément d'agrafage (1), qui est muni d'une goupille de sécurité (33) qui, lorsque l'élément porteur (43) se trouve dans sa position d'insertion dans le logement de réception (20, 21) de l'élément porteur, est disposée dans l'évidement (44) ménagé dans l'élément porteur, ce qui fait que l'élément d'agrafage (1) est bloqué en position dans l'élément porteur (43).

2. Dispositif selon la revendication 1, **caractérisé en ce que** l'élément d'agrafage (1) comprend deux parois latérales (16, 17) se faisant respectivement face qui, dans une portion de tête (19) orientée vers l'élément d'immobilisation en position (2), comportent respectivement une fente de réception (20, 21) faisant office de logement de réception de l'élément porteur, fentes qui sont ouvertes en direction d'un bord latéral de la paroi latérale (16, 17) concernée.

3. Dispositif selon la revendication 2, **caractérisé en ce qu'**au niveau des extrémités de chaque paroi latérale (16, 17) se situant sur la portion de tête (19) il est prévu, réalisée solidaire par formage une patte latérale (13, 14) faisant saillie vers l'extérieur, orientée selon une disposition en angle droit par rapport à la paroi latérale (16, 17).

4. Dispositif selon la revendication 3, **caractérisé en ce qu'**il est prévu, dans la portion de tête (19), des segments élastiques (24, 25) qui sont orientés selon une disposition en angle droit par rapport aux parois latérales (16, 17) et selon une disposition oblique par rapport aux fentes de réception (20, 21).

5. Dispositif selon l'une des revendications 2 à 4, **caractérisé en ce qu'**il est prévu, au niveau de la paroi arrière (18) de l'élément d'agrafage (1) se situant entre les parois latérales (16, 17), une patte de butée (31) qui est orientée perpendiculairement à la paroi arrière (18) et dont l'extrémité libre se situant à l'opposé de la paroi arrière (18) se termine à peu de distance de la goupille de sécurité (33).

6. Dispositif selon l'une des revendications 1 à 5, **caractérisé en ce que** la goupille de sécurité (33) est réalisée solidaire par moulage de la plaque de recouvrement supérieure (32) de l'élément d'immobilisation en position (2).

7. Dispositif selon la revendication (6), **caractérisé en ce que** l'élément d'immobilisation en position (2) comporte au-moins un bras de blocage en position (34, 35) réalisé solidaire par moulage de la plaque de recouvrement supérieure (32), qui opère en combinaison avec une languette de blocage (26, 27) dont est muni l'élément d'agrafage (1) et qui immobilise en position l'élément d'immobilisation en position (2) dans sa position rehaussée de présentation préalable ainsi que dans sa position de montage finale d'insertion à fond de course.

8. Dispositif selon la revendication 7, **caractérisé en ce que** la plaque de recouvrement supérieure (32) comporte au-moins une ouverture de libération du blocage en position (38, 39), au travers de laquelle il est possible d'insérer, pour dégager de leur emprise d'encastrement réciproque le ou chaque bras de blocage en position (34, 35) avec la languette de blocage correspondante, un outil agissant sur le ou sur chaque bras de blocage en position (34, 35).

9. Dispositif de fixation avec un élément rapporté (3), **caractérisé en ce qu'**il est prévu un dispositif selon l'une des revendications 1 à 8 et **en ce que** l'élément rapporté (3) est muni d'un agencement de mise en prise d'encastrement (10, 11) destiné à permettre son raccordement avec l'élément d'agrafage (1).
